# EUROPEAN PATENT APPLICATION

(11) **EP 1 104 189 A2**
(43) Date of publication of application: **30.05.2001**
(21) Application number: 00306895.4
(22) Date of filing: 11.08.2000
(51) Int. Cl.: H04N 7/00

(54) **Broadcast receiving system and recording medium**

(30) Priority: 29.10.1999 JP 30988999
(71) Applicant: FUJITSU LIMITED, Kawasaki-shi, Kanagawa 211-8588 (JP)
(72) Inventor: Nakatani, Hideki, Nakahara-ku, Kawasaki-shi, Kanagawa 211 (JP); Nakamura, Yasufumi, Nakahara-ku, Kawasaki-shi, Kanagawa 211 (JP); Ito, Tetsunori, Inagi-shi, Tokyo (JP); Fujimoto, Chikae, Inagi-shi, Tokyo (JP); Miyagawa, Satoshi, Inagi-shi, Tokyo (JP); Arai, Yasuyuki, Saitama, 350-0036 (JP)
(74) Representative: Hitching, Peter Matthew

(57) **Abstract**

A broadcast receiving system is disclosed which is capable of reducing an operational burden on a user by detecting a miss of program and an omission of recording thereof.

The broadcast receiving system comprises a detection unit (31) for detecting a predetermined state with respect to a program that is to be broadcast, a storage unit (35) for storing a location of program information containing a broadcast schedule of the program to be broadcast, a broadcast schedule searching unit (33) for searching for a next broadcast schedule of the program from the program information in accordance with the detection of the predetermined state, and a reservation unit (38) for executing at least one of notifying of a result of the search and a reserving operation for the program.

## Description

### BACKGROUND OF THE INVENTION

The present invention relates generally to a broadcast receiving system for TV broadcast, etc., and more particularly to a broadcast receiving system suitable for reserving watching and recording of a program.

This type of broadcast receiving system may be exemplified by memory built-in TV systems as proposed in Japanese Patent Laying-Open Application No.09-065225, Japanese Utility Model Laying-Open Application No.06-077376 and Japanese Patent Laying-Open Application No.8-84302. Those systems enable, even if unable to watch a program during broadcasting (which will hereinafter be referred to as a miss program), users to watch the miss program as far as the miss program is stored from its heading in the built-in memory.

Further, according to a guide system for broadcast services, which is proposed in Japanese Patent Laying-Open Application No.11-88280, a provider of the broadcast services automatically judges the miss from history data and watching record data, then notifies of guide data with E-mail, and further displays the notified data on a screen. This system is thereby prevents the miss of the program.

Moreover, Japanese Patent Laying-Open Application No.5-75555 discloses a technology capable of receiving or recording a desired program by previously registering, as an item of program selection information, program information on a desired program on the receiving side through broadcast electronic waves containing the program information on every program.

Japanese Patent Laying-Open Application No.10-276421 discloses a technology capable of, when a desire-for-watching program is decided to be broadcast, easily making user recognize a date and a time when the this program is scheduled to be broadcast. Further, each user requests beforehand a broadcasting station for a program suited to an user's own liking, and the user is informed of the broadcasting schedule date/time of this program. This contrivance reduces a probability of missing the target program.

All the conventional technologies described above have been actualized as systems including the components on the side of broadcasting companies in addition to the components on the side of receivers. Namely, the system of the broadcasting companies need special processes for actualizing those technologies.

On the other hand, Japanese Patent Laying-Open Application No.10-021601 discloses a technology capable of reserving a rebroadcast if overlapped with a time zone of the reserved program. According to this technology, to start with, it is judged by looking through the program data whether or not the overlapped program has a schedule of rebroadcast. If the program is to be rebroadcast, the user is able to inquire about whether the reservation is changed or canceled. Thus, when the overlapped program has the rebroadcast schedule, the rebroadcast thereof can be immediately reserved.

According to this technology, however, a miss range is confined to the case where the reservation is overlapped. Further, whether or not there is the rebroadcast is judged based on only the information at that point of time. It is therefore impossible to effectively find out the rebroadcast schedule of the miss program if the broadcast schedule is updated afterward.

Furthermore, the invention disclosed in Japanese Patent Laying-Open Application No.07-135621 provides an interface capable of recommending programs when tuning and recording by giving a priority to names of the programs and thus assisting the users to select from recommended candidate programs, and an auto operating function acting for a user's operation.

Similarly, the broadcast tuning system disclosed in Japanese Patent Laying-Open Application No.9-191235 picks up a program having a content in which the user is interested from a plurality of programs. According to this invention, the user is made to designate a keyword that is stored, and it is judged whether or not the program is a program desired by the user. Further, according to this invention, it is automatically judged by making use of watching record data whether or not the program is what the user has an interest in. Thus, this invention prevents a miss of the program suited to the user's liking by the auto tuning.

Moreover, according to the invention disclosed in Japanese Patent Laying-Open Application No.09-200638, a TV program in which the user would be interested is automatically searched from a channel guide list, thus decreasing a probability of missing the program the user wishes to watch.

The invention disclosed in Japanese Patent Laying-Open Application No.05-122674 provides a CATV system capable of, even if the user might interrupt the watching of a program, easily watching a sequel to that program in a next rebroadcast. The CATV center broadcasts the same broadcast program at different channels in different time zones. Then, the CATV center transmits link data and starting time data on TV signal. The link data links the channel for broadcasting the same broadcast program to TV signals together with the starting time data which indicates a broadcast starting time per channel of the program.

Those prior arts technologies are, however, actualized limited to the CATV system. Further, this invention is not applied the general miss programs. This invention provides nothing but to watch, if the watching of the program has been interrupted, its sequel in the rebroadcast. Furthermore, those inventions are also actualized as systems including the components on the side of the broadcasting companies in addition to the components of the side of the receivers.

According to the invention disclosed in Japanese Patent Laying-Open Application No.10-093936, setting of a content of recording is automatically changed in a free time of vertical blanking in the TV signals in accordance with a change in broadcast contents, and hence it is feasible to prevent an omission of recording with a change in the program after reserving the recording. It is, however, required that broadcasting signals including program information should be transmitted. The program information contains at least a channel number, a program name, a broadcasting year/month/date, a broadcast starting time and a broadcast ending time in the free time of the vertical blinking in the TV signals. This is also a broadcasting system including the components on the side of the broadcasting company.

A scheduler system using a Gopher agent for a TV receiving device that is disclosed in Japanese Patent Laying-Open Application No.9-200640, automatically searches for a desired TV program from a program guide list and automatically performs the recording and notification. A desired item of program information is, however, required to be inputted by the user, which causes a large burden on the user.

Further, this has no contrivance for corresponding to the case where the program is actually missed.

Further, the above prior art technologies as the systems including the devices on the side of the broadcasting companies, provide the function of preventing the miss of program. Hence, the system architecture becomes complicated and is hard to be embodied in a simple manner.

### SUMMARY OF THE INVENTION

It is a primary object of the present invention, which was devised to obviate the problems inherent in the prior arts, to provide a broadcast receiving system capable of reducing an operational burden on a user by detecting a miss of program and an omission of recording thereof, and of making arrangements for notifying of a next broadcast schedule of a missed program and for reserving watching or recording thereof. The broadcast receiving system of the present invention is also capable of making arrangements for reserving the watching, etc., of the missed program by using only a device on the side of the user without depending on devices on the side of a broadcasting company.

To accomplish the above object, according to a first aspect of the present invention, a broadcast receiving system comprises a detection unit for detecting a predetermined state with respect to a program that is to be broadcast, a storage unit for storing a location of program information containing a broadcast schedule of the program to be broadcast, a broadcast schedule searching unit for searching for a next broadcast schedule of the program from the program information in accordance with the detection of the predetermined state, and a reservation unit for executing at least one of notifying of a result of the search and a reserving operation for the program.

The broadcast receiving system according to the present invention may further comprise a program information storage unit for storing program information on a program to be broadcast.

The broadcast receiving system according to the present invention may further comprise a reservation recording unit for recording a reservation of the program by the reservation unit.

The program information may contain a program name, and the broadcast schedule searching unit may search for a next broadcast schedule of the program by use of the program name.

The broadcast receiving system according to the present invention may further comprise an update monitoring unit for monitoring an update of the program information, and the broadcast schedule searching unit, if unable to find out a next broadcast schedule of the program, may repeatedly search for the program information when the program information is updated till the next broadcast schedule of the program is found out.

The broadcast receiving system according to the present invention, may further comprise a reservation management unit for judging whether or not an operation for the reserved program is completed, and the detection unit, if the reservation management unit judges that the operation for the reserved program is not completed, may detect the predetermined state with respect to the program.

The broadcast receiving system according to the present invention may further comprise a notification receiving unit for receiving a notification of the predetermined state with respect to program notified by a user operation, and the detection unit may detect the predetermined state with respect to the program by receiving the notification.

The broadcast receiving system according to the present invention may further comprise an indication unit for notifying of the predetermined state with respect to the program, or a remote control receiving unit for receiving a miss of program from a remote control unit. The detection unit detects the predetermined state of the program by receiving a notification occurred by an operation for this indication unit or a notification occurred by an operation for the remote control unit.

The indication unit is, e.g., a notification button or a notification menu displayed on a display device. The remote control unit may be, e.g., a infrared remote controller.

The broadcast receiving system according to the present invention may further comprise a program temporary storing unit for temporarily storing the program being received as receiving data, and the broadcast receiving system, when detecting the predetermined state with respect to the program that is on the receipt, may execute the processing of the system by use of the receiving data of the program temporarily stored.

The broadcast receiving system according to the present invention may reproduce, when detecting the omission of watching of the program, the program from the receiving data temporarily stored.

In what has been described so far, the predetermined state is, e.g., a miss of the program, and the reserving operation for the program is, e.g., a reservation of watching or recording.

Further, the predetermined state is, e.g., an omission of recording the program, and the reserving operation for the program is, e.g., the reservation of watching or recording.

The broadcast receiving system according to the present invention may further comprise a connection unit for connecting the recording device. The recording device may be connected to this connection unit, and the reservation unit may reserve recording of the program by the recording device.

The broadcast receiving system according to the present invention may further comprise a recording unit for recording the program, and the reservation unit may reserve recording of the program by the recording unit.

The detection unit may have an audience detector for detecting an existence of an audience in the vicinity of the system or the display device connected to the system, and the detection unit may, if the audience detector dose not detect the existence of the audience at a broadcasting time of the program of which the watching has been reserved, detect the miss of program.

The detection unit may, if a reserving person of the program is not identical with the audience of the program, detect the miss of the program.

The detection unit may further have an imaging unit for imaging the audience of the program, an image recording unit for recording an image of the reserving person of the program, and an image comparing unit for comparing the formed image of the audience with the recorded image of the reserving person. The detection unit may, if the image of the reserving person of the program is not identical with the image of the audience of the program, detect a miss of the program.

According to the present invention, there is provided a readable-by-computer recording medium recorded with a program for making a computer execute a step of detecting a predetermined state with respect to a program that is to be broadcast, a step of searching for a next broadcast schedule of the program from program information in accordance with the detection of the predetermined state, and a step of executing at least one of notifying of a result of the search and a reserving operation for the program.

According to the present invention, there is provided a readable-by-computer recording medium recorded with a program for making a computer execute a step of detecting a miss of a program that is to be broadcast, a step of searching for a next broadcast schedule of the program from program information in accordance with the detection of the miss of the program, and a step of reserving to watch the program on the basis of the search.

According to the present invention, there is provided a readable-by-computer recording medium recorded with a program for making a computer execute a step of detecting an omission of recording of a program that is to be broadcast, a step of searching for a next broadcast schedule of the program from program information in accordance with the detection of the miss of the program, and a step of reserving the recording of the program on the basis of the search.
According to the present invention, the broadcast schedule searching unit searches for the next broadcast schedule of the program in the predetermined state, and the reservation unit performs at lest one of the notification of the searched result and the reservation for the watching of the program on the basis of the searched result. It is therefore feasible to detect the miss of the program and the omission of the recording thereof, and to make the notification of the miss of the program and the reservation for the watching or the recording by lessening an operational burden of the audience.

### BRIEF DESCRIPTION OF THE DRAWINGS

FIG. 1 is a diagram showing a functional architecture of a broadcast receiving system in a first embodiment of the present invention;
FIG. 2 a flowchart showing a process of automatically detecting a miss of program by a collation between pieces of face image data;
FIG. 3 is a flowchart showing a process of automatically detecting the miss of the program by detecting a failure in executing a reserving operation;
FIG. 4 is a diagram showing a miss program notification input screen;
FIG. 5 is an explanatory diagram showing a function of a program temporary storing unit;
FIG. 6 is a table showing a data structure of an electronic program information database;
FIG. 7 is a flowchart showing a process by a program information extraction unit;
FIG. 8 is a flowchart showing a process by an EPG monitoring unit;
FIG. 9 is a table showing a data structure of a reservation database;
FIG. 10 is a flowchart showing a process by a reservation management unit;
FIG. 11 is a flowchart showing a process by a miss program searching unit;
FIG. 12 is a flowchart showing a process by a reservation arrangement unit;
FIG. 13 is a diagram showing an example of an architecture using a personal computer (PC);
FIG. 14 is a diagram showing an example of an architecture based on a receiver and an external recording device with a function of the receiver;
FIG. 15 is a diagram showing an example of an architecture based on the receiver and the external recording device;
FIG. 16 is a diagram showing an example of an architecture based on the receiver with a recording function; and
FIG. 17 is a flowchart showing a miss program judging process in a modified embodiment by automatically detecting an existence/non-existence when watching reserved program.

### DETAILED ESCRIPTION OF THE PREFERRED EMBODIMENTS

Preferred embodiments of the present invention will hereinafter be described with reference to the accompanying drawings.

### (First Embodiment)

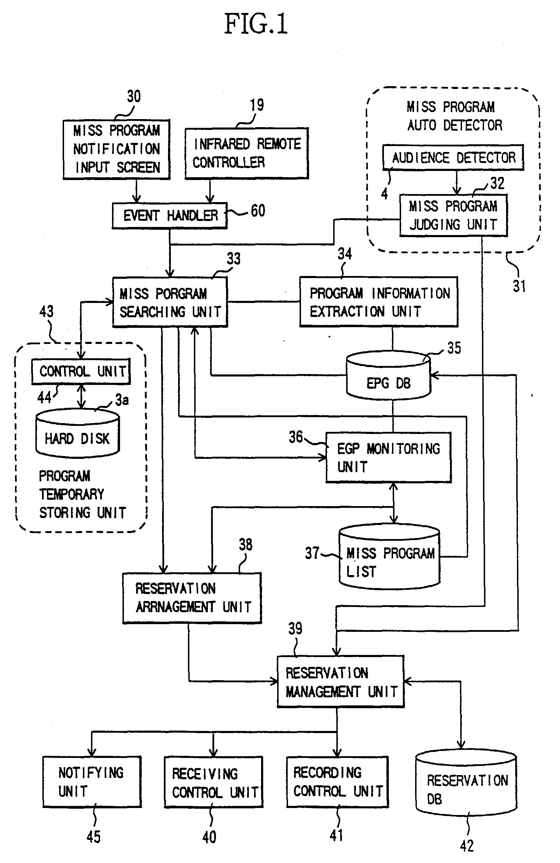

A broadcast receiving system in a first embodiment of the present invention will hereinafter be described referring to FIGS. 1 through 13 and 17.

### 〈Hardware Architecture〉

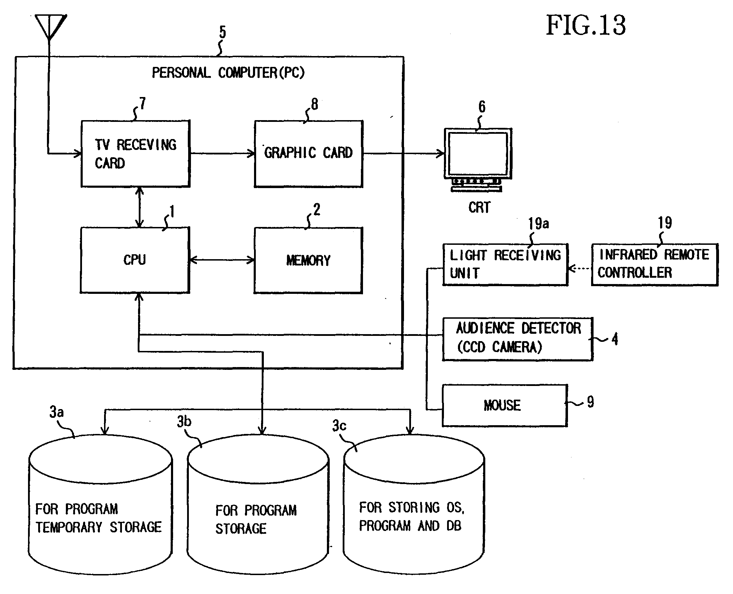

FIG. 13 is a diagram showing an example of a hardware architecture in which the broadcast receiving system of the present invention is embodied by use of a personal computer. This broadcast receiving system includes a personal computer 5, a CRT (Cathode Ray Tube) 6, hard disks 3a ∼ 3c, an audience detector 4 (CCD camera), a light receiving unit 19a (corresponding to a remote control receiving unit) for a infrared infrared remote controller 19 (corresponding to a remote control unit) for detecting an operation of the audience, and a mouse 9.

Further, the personal computer 5 has a TV receiving card 7 for receiving a TV broadcast, a graphic card 8 for controlling a display on the CRT 6, a memory 2 (corresponding to a storage unit) for storing a program and data, and a CPU 1 for controlling the broadcast receiving system by executing the program stored in the memory 2.

The CPU 1 performs a function as the broadcast receiving system by executing the program stored in the memory 2.

The memory 2 is stored with a variety of programs executed by the CPU 1. Further, the memory 2, with the execution of those programs, stores pieces of data inputted to and outputted from the CPU 1.

The hard disk 3a is used for temporarily storing a TV program in the midst of being received as receiving data. The hard disk 3b (corresponding to a recording unit) serves to record the TV program. Further, the hard disk 3c is used as a storage area for an operating system (OS), an application program called control-program executed on CPU 1 or for a database.

The TV receiving card 7 receives a designated TV broadcasting program, and transfers a demodulated picture to the graphic card 8. Note that the TV receiving card 7 demodulates sound signals as well. the sound signals are amplified by an unillustrated amplifier and outputted from an unillustrated loudspeaker.

The graphic card 8 develops the transferred picture into a bitmap. Further, the graphic card 8 converts the bitmap into screen scan signals on the CRT 6, and controls a display of that picture on the CRT 6. The graphic card 8 also receives display data from the CPU 1, then develops the display data into a bitmap, and transfers the bitmap to the CRT 6.

The CRT 6, based on a control signal from the graphic card 8, displays TV-broadcast pictures and the display data given from the CPU 1.

The light receiving unit 19a receives operation signals transmitted by the infrared remote controller 19, and transfers these signals to the CPU 1. The infrared remote controller 19 provides a user with a function of remote-controlling buttons and menus on the CRT 6.

The mouse 9 likewise provides the user with the function of operating the buttons and the menus on the CRT 6.

### 〈Functional Architecture〉

FIG. 1 is a diagram showing a functional architecture of the broadcast receiving system. The broadcast receiving system has, as functions, a fail-to-watch (hereinafter simply termed "miss") notification input screen 30 displayed on the CRT 6, the infrared remote controller 19 for controlling the broadcast receiving system, an event handler 60 (corresponding to a notification receiving unit) for detecting user's operations to the miss notification input screen 30 and the infrared remote controller 19, and a miss program auto detector 31 for automatically detecting a miss of an watching reserved program (the miss notification input screen 30 or the miss program auto detector 31 corresponds to a miss detection unit). The broadcast receiving system further includes a miss program searching unit 33 for searching for a title of a program which is detected to be missed (which is hereinafter referred to as a miss program), and indicating that the miss program be reserved again, an electronic program information database 35 (corresponding to a program information storage unit) for retaining items of information on a name and a broadcasting time zone of program to be broadcast, a broadcasting channel, etc., program information extraction unit 34 for extracting a program title, etc. from the electronic program information database 35, an EPG (Electronic Program Guide) monitoring unit 36 (corresponding to an update monitoring unit) for monitoring that the program information stored in the electronic program information database 35 is updated, a miss program list 37 for retaining a list of the miss programs, a reservation arrangement unit 38 for notifying the audience of a next broadcasting schedule of the miss program and making arrangements for reserving the watching of that broadcast or reserving a record of that broadcast, and a reservation database 42 for recording the program reservation data. The broadcast receiving system still further includes a reservation management unit 39 for giving an indication of receiving and recording the reserved program on the basis of the reservation data of the reservation database 42 (the reservation arrangement unit 38 and the reservation management unit 39 correspond to a reservation unit), a receiving control unit 40 for controlling the receiving of the reserved program in accordance with the indication given from the reservation management unit 39, and a recording control unit 41 for controlling the recording of the reserved program based on the indication from the reservation management unit 39. The CPU 1 executes the programs stored in the memory 2, thereby actualizing those functions. Those components will hereinafter be explained.

### [Miss Notification Input Screen 30]

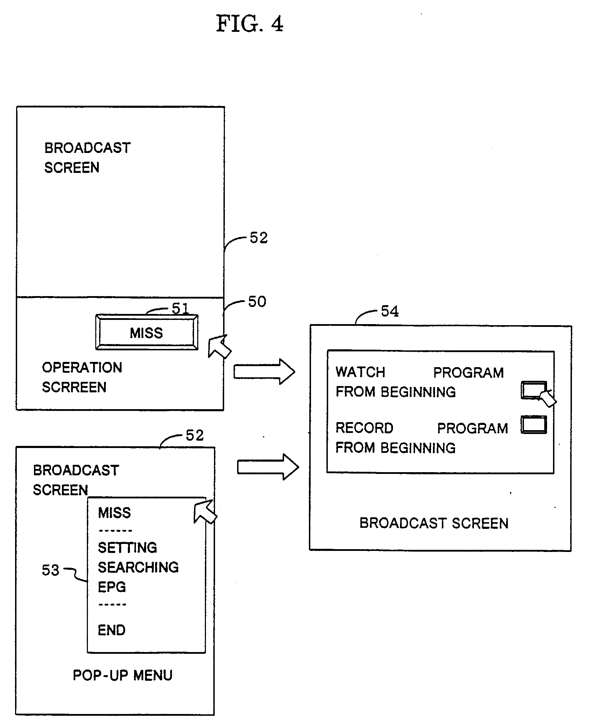

The miss notification input screen 30 is used for notifying the miss program searching unit 33 of the audience having missed the program. FIG. 4 shows the miss notification input screen 30 provided in the broadcast receiving system in the first embodiment. The miss notification input screen 30 in the broadcast receiving system has two modes as illustrated in FIG. 4.

One mode is that an unillustrated display control-program for displaying the miss notification input screen 30 (a program having this display function is hereinafter called the display program) displays a miss program button 51 (corresponding to an indicating unit and a notifying button) on an operations screen 50 on the CRT 6. A contrivance is that the miss program button 51 on the operation screen 50 can be set undisplayed by an unillustrated environment setting menu. Namely, a flag corresponding to a setting item of the environment setting menu is provided on the memory 2. When this flag is switched ON, the display program displays the miss program button 51 on the operation screen 50 in FIG. 4.

Another mode is that the display program displays miss program item of a pop-up menu on a broadcast screen 53 (corresponding to the indication unit and the notifying menu) in FIG. 4. When the user clicks a right button of the mouse 9, the display control-program receives an event of this user operation via the event handler 60 and a window system of the personal computer, thereby displaying the pop-up menu 53.

When the user clicks a left button, pinpointing the miss program button 51, of the mouse 9, or selects a miss program item of the pop-up menu 53, this operation is detected by the event handler 60 and transferred to the display program. Then, the display on the CRT 6 is changed to a selection screen for an arrangement operation as on a screen 54. When the user selects a button of the screen 54, this operation is detected by the even handler 60 and transferred to the miss program searching unit 33.

The audience operates the miss program button 51 (or the miss program item of the pop-up menu 53), and thus notifies of the miss of program in the following cases.
Case 1: The user, though having watched the program throughout, wishes to watch it once again or record the same program.
Case 2: The user, though watching the program from halfway, wishes to watch or record the same program from the beginning.
Case 3: The user happens to find out a desire-to-watch- or record-program by looking through a table of already broadcast programs.

In the Cases 1 and 2, with a notification date and time and a channel in the midst of being watched serving as a key, the program information detection unit 34 searches for data on the miss program from the electronic program information database 35 in response to a command given from the miss program searching unit 33.

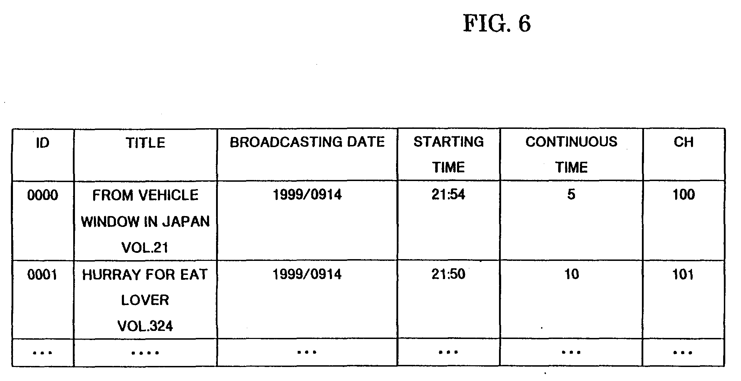

In the Case 3, the audience points the miss program on the items of electronic program information displayed on the screen, and operates the miss program button 51 (or the miss program item of the pop-up menu 53), thereby giving a notification that the audience missed that program. Responding to this operation, the miss program searching unit 33 obtains data on the program pointed on the electronic program information being looked through. FIG. 6 shows a data structure of the electronic program information database 35.

### [Infrared remote controller 19]

Further, the broadcast receiving system in the first embodiment includes, as shown in FIG. 13, the infrared remote controller 19. When the user depresses the button on the infrared remote controller 19, an operation signal thereof is transmitted to the CPU 1 via the unillustrated light receiving unit. This operation signal is detected by the event handler 60. Accordingly, the user is able to notify the miss program searching unit 33 of the miss of program as by the button on the miss notification input screen 30.

### [Miss Program Auto Detector 31]

The miss program auto detector 31 automatically detects the miss program and notifies the miss program searching unit 33 of the miss program. The miss program auto detector 31 includes an audience detector 4 (corresponding to an imaging unit) for imaging a program reserving person or audience, and a miss program judging unit 32 for comparing pictures of the imaged reserving person and audience with each other, and making a judgement about an identity therebetween. This miss program judging unit 32 incorporates a face recognition program (corresponding to an image comparing unit) for collating image data of faces of the audiences.

The audience detector 4 constructed of a CCD camera images the face of the program reserving person or audience and generates the image data. The image data of the face of the reserving person is recorded on the hard disk 3c (corresponding to an image recording unit) in linkage to the reservation data in the reservation database 42. On the other hand, the image data of the face of the audience is generated by the face being imaged when watching the program, and stored in the memory 2 (corresponding to the image recording unit).

The miss program is detected in the following procedures. To start with, when a reserved program starts being received, the reservation management unit 39 notifies the miss program auto detector 31 of the start of the program together with a title of the reserved program and an address of the face image data of the reserving person on the hard disk 3c.

Then, the miss program auto detector 31 indicates the face recognition program of the miss program judging unit 32 to compare the face image data of the reserving person with the face image data of the audience.

The face recognition program reads the face image data of the reserving person from the hard disk 3c, and compares this piece of image data with the face image data of the audience of the reserved program which is stored in the memory 2. This process involves the use of a template matching method based on a normalization correlation, known as an image processing technology. The template matching method is that densities of two images are compared in respective positions, then a correlation value of the two images is calculated, and, if the correlation value is equal to or larger than a predetermined value, it is judged that the two images are identical with each other.

Thus, when an watching-reserved program is started, the face recognition program judges whether or not the audience is identical with a person who reserved the watching of the program. As a result, if judging that the reserving person did not watch the reserved program (which corresponds to a case where the image of the program serving person is not identical with the image of the program audience), the miss program judging unit 31 notifies the miss program searching unit 33 of the miss being detected together with its program title. The miss program searching unit 33 thereby detects the miss of the program.

Further, the miss program auto detector 31 monitors whether or not the reservation management unit 39 writes a failure of the reserving operation (for the watching or recording) to the reservation database 42. As a result, the miss program auto detector 31 notifies the miss program searching unit 33 together with the program title thereof also when the failure of the reserving operation is written to the reservation database 42. With this operation, the miss program searching unit 33 also detects the miss of the program.

### [Program Temporary Storing Unit 43]

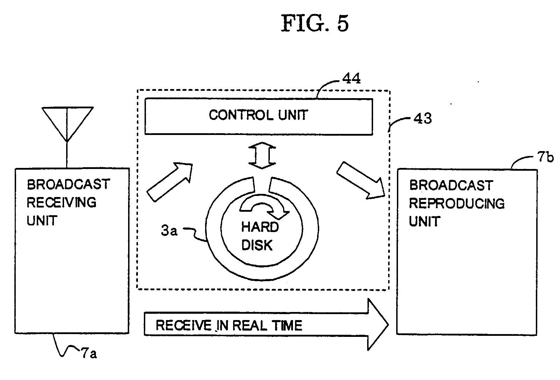

A program temporary storing unit 43 temporarily stores the hard disk 3a with a content (receiving data) of the program in the midst of being received. This function will be explained referring to FIG. 5. As shown in FIG. 5, the program temporary storing unit 43 includes a hard disk 3a constituting a ring buffer, and a control unit 44 for controlling an access to the hard disk 3a. In the broadcast receiving system, the control unit 44 receiving an indication from the CPU 1 transfers the receiving data to the hard disk 3a from a broadcast receiving unit 7a within the TV receiving card 7 in parallel to the processing by the CPU 1. The receiving data is compressed in an MPEG (Moving Picture Experts Group) format, and decoded in a broadcast reproducing unit 7b.

Broadcast data being received are written from the control unit 44 to the hard disk 3a as a ring buffer. Accordingly, the hard disk 3a is incapable of retaining the receiving data for over a predetermined retaining time determined by a ratio of a capacity of the hard disk 3a to a receiving data quantity per unit time. Whereas if falling within a range of this retaining time, the broadcast can be referred to while tracing back the time.

When the miss of the reserved program is detected, the miss program searching unit 33 indicates the control unit 44 of the program temporary storing unit 43 to reproduce the program upon a start-of-reproduction time (traced back time for reproduction). The control unit 44, when notified of the miss of program, judges at first whether or not the miss program exists in the receiving data stored in the hard disk 3b. If a power switch of the broadcast receiving system is kept ON and there is no changeover of the program channel till the miss notification is given since the time when the miss program has been started, and if the retaining time does not elapse since the start of broadcasting the same program, the miss program is stored. In this case, the control unit 44 obtains a location (address) on the ring buffer from a receiving data quantity per unit time and a time that should be traced back to. Then, the control unit 44 reads the temporarily recorded receiving data from that location.

The thus read receiving data have been compressed in the MPEG format and are therefore decoded by the broadcast reproducing unit 7b.

### [Miss Program Searching Unit 33]

The miss program searching unit 33 obtains a title of the miss program and indicates the reservation arrangement unit 38 to make an arrangement for receiving the watching. As discussed above, there might be a case where the miss program is detected based on the indication of the audience via the miss program notification input screen 30 and the infrared remote controller 19 during the watching, and a case where the miss program is detected by the notification given from the miss program auto detector 31.

If the miss program is detected by the indication from the audience, the notifying date and time and the channel being watched are known. In this case, with a command given from the miss program searching unit 33, the program information extraction unit 34 searches for a title of the miss program from the electronic program information database 35, wherein the channel and the date/time serve as a key.

On the other hand, in the case of the notification from the miss program auto detector 31, the program title has already be obtained.

The miss program searching unit 33, with the program title being used as a key, again searches through the electronic program information database 35. Then, when detecting a date and time when the miss program is scheduled to be broadcast next time, a broadcast continuous time, and a channel information (which correspond to a broadcast schedule), the miss program searching unit 33 indicates the reservation arrangement unit 38 to notify the audience of that purport and to reserve again the watching (or the recording) on the broadcast schedule thereof (the miss program searching unit 33 and the program information extraction unit 34, as explained above, correspond to a broadcast schedule searching unit).

Further, the miss program searching unit 33, if unable to find out the broadcast schedule of the miss program, adds the program information thereof to the miss program list 37. That program thereby turns out to be a continuous monitoring target of the EPG monitoring unit 36.

As discussed above, the miss program auto detector 31 and the miss program searching unit 33 correspond to a detection unit. Further, the miss of program and an omission of the record correspond to a predetermined state.

### [EPG Monitoring Unit 36]

The EPG monitoring unit 36 reads a title of the miss program from the miss program list 37, and, with the miss program information serving as a key, periodically searches through the electronic program information database 35. Then, upon detecting the broadcast schedule of the miss program, the EPG monitoring unit 36 notifies the reservation arrangement unit 38 of the broadcast schedule date/time, the broadcast continuous time and the channel information. Thereafter, the EPG monitoring unit 36 deletes the program information thereof from the miss program list 37.

### [Reservation Arrangement Unit 38]

The reservation arrangement unit 38, when the miss program is detected (or the program of which the record is omitted is detected) by the miss program searching unit 33 or the EPG monitoring unit 36, makes an arrangement for reserving the watching or the recording of the miss program (or the record-omitted program). To be more specific, the reservation arrangement unit 38 issues a command to a notifying unit 45 to notify the audience of the broadcast schedule of the miss program. Next, the reservation arrangement unit 38 issues a command to the reservation management unit 39 to register the watching or the recording or both in the reservation database 42. The reservation management unit 39 thereby indicates the receiving control unit 40 or the record control unit 41 to receive or record the program at the program broadcasting time on the very date (and, as a result, the miss program is to be received or recorded).

Which operation, the watching or the record, should be executed can be set based on the environment setting menu described above. Further, an inquiry screen for selecting the operation is specified to start up when detecting the miss of program in the environment setting menu.

### [Notifying Unit 45]

The notifying unit 45 notifies of a purport that the miss program has been detected, a purport that the miss program will be broadcast, and a purport of being set under continuous monitoring by the EPG monitoring unit 36 because of the miss program being undetected, or a purport that the reservations of the watching and record have been completed. Those notifications may involve displaying messages on the screen, chiming and so on in accordance with settings in the environment setting menu.

### [Receiving Control Unit 40]

The receiving control unit 40 controls receiving the program through the TV receiving card 7. More specifically, the receiving control unit 40 indicates the TV receiving card 7 to execute ON/OFF operation of receiving and to show a channel to be selected.

### [Record Control Unit 41]

The record control unit 41 stores the hard disk 3b with the receiving data on the recording-reserved program that has been received.

### [Miss Program List 37]

The miss program list 37 is stored with information on the miss programs (or programs of which recordings have been omitted). This item of information contains titles of the miss programs (or the programs of which recordings have been omitted).

### [Electronic Program Information Database 35]

The electronic program information database 35 is categorized as a database periodically stored with an electronic program table (hereinafter abbreviated to EPG) contained in the broadcast data. The EPG consists of, e.g., a name of broadcasting station, a broadcast starting date/time, a broadcast ending date/time, a program title, the cast, supplementary information (such as voice multiplex, stereo, fee charged, subtitling, etc.). FIG. 6 shows a data structure of the electronic program information database 35 in the first embodiment. The electronic program information database 35 is structured of records, i.e., six fields such as ID, title, broadcasting date, starting time, continuous time and channel.

The ID is defined as a serial number for identifying the record of the database. The title is a program title (corresponding to a program name). The broadcasting date is a date when the program is to be broadcast. The starting time is a time when the broadcast of the program is to start. The continuous time is a time length for which the program continues to be broadcast. The channel is a channel number at which the program is to be broadcast (the broadcasting date, the starting time, the continuous time and the channel correspond to a broadcast schedule).

The EPG is transmitted in a manner of being overlapped in a stream of the digital broadcasting. In this case, the same content is repeatedly transmitted at a short interval so that the receiving side can obtain the information whenever the receiving process starts. Then, if the contents of the EPG (called program table) to be transmitted are updated, this effect is also notified of. The electronic program information database 35 is periodically stored in the above format with latest information based on the program table (separated from the above stream) transmitted by broadcasting.

### [Reservation Database 42]

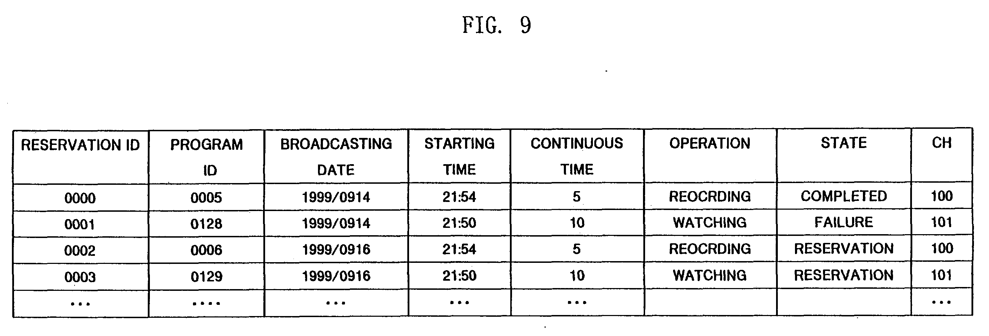

The reservation database 42 is stored with a schedule of broadcasts of which the watchings and recordings are reserved. FIG. 9 shows a data structure of the reservation database 42 in the first embodiment. The reservation database 42 is structured of records, i.e., eight fields such as reservation ID, program ID, broadcasting date, starting time, continuous time, function, state and channel.

The reservation ID is defined as a serial number for recognizing the records of this database. The program ID is a number, for identifying each program, given to each program of the electronic program information to be distributed. The broadcasting date is a date when the program is to be broadcast. The starting time is a time when the broadcast of the program is to start. The continuous time implies a time length for which the program continues to be broadcast. The function is a function (watching or recording or both) to be reserved. The state represents a state of the reserving operation, and is classified into four states, i.e., a reserving state, a starting state, an completed state and a failure state. The channel is a channel number at which the reserved program has been broadcast.

### [Reservation Management Unit 39]

The reservation management unit 39 indicates a reserving operation in accordance with the reservation schedule registered in the reservation database 42. That is, the reservation management unit 39 periodically reads the reservation schedule from the reservation database 42 and, based on this schedule, issues commands to the receiving control unit 40 and the record control unit 41 to execute a process of watching and a process of recording. The reservation management unit 39, after issuing the commands, sets the state of the reservation database 42 to "starting state". Upon a completion of the reserving operation, the reservation management unit 39 sets the state of the reservation database 42 to the "completed state ".

Further, the reservation management unit 39, when the watching-reserved program is started, judges that the power supply is kept OFF. This judgement is made depending on whether or not the schedule is actually executed. Namely, even after the broadcast starting time, the reservation database 42 remains in the reserving state (the starting state is not yet reached), the reservation management unit 39 judges that the power supply is kept OFF. In this case, the reservation management unit 39 rewrites the state of the reservation database 42 to the "failure state".

Moreover, if a notification of the completion of operation due to an interrupt has not sent back from the receiving control unit 40 or the recording control unit 41 for the continuous time since "starting state" was set, the reservation management unit 39 sets the state of the reservation database 42 to the "failure on the assumption that an abnormality occurs in the receiving or recording.

### 〈Operation〉

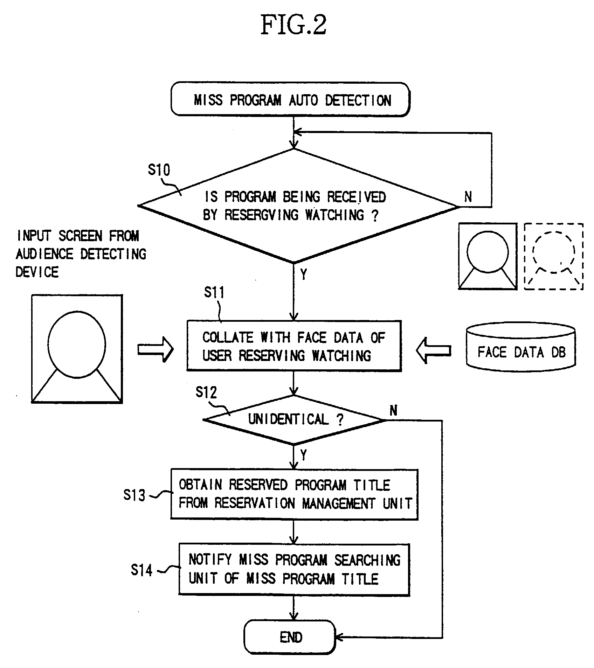

Processes of the program executed by the CPU 1 of the broadcast receiving system will be explained with reference to FIGS. 2, 3, 7, 8, 10 through 12 and 17.

### [Process by Miss Program Auto detector 31]

FIG. 2 is a flowchart showing a process by the miss program auto detector 31.

The miss program auto detector 31 stands by till the receiving based on the reservation of watching (or recording) is started (step S10 that will hereinafter be abbreviated such as S10).

Upon a start of receiving the reserved program, the audience detector 4 (CCD camera) images a face of the audience. The miss program auto detector 31 receives a face image data address on the memory 2 from the audience detector 4. Further, the miss program auto detector 31 obtains an on-the-hard-disk-3c address of the linked face image data of the reserving person from the reservation database 42 via the reservation management unit 39. Moreover, the miss program auto detector 31 makes the face recognition program collate these two piece of face image data with each other through the miss program judging unit 32 (S11). The collation is, as described above, based on the template matching method.

Next, the miss program judging unit 32 judges a result of the collation by the face recognition program (S12). If the result of the collation shows being unidentical, the miss program auto detector 31 obtains a title of the reserved program concerned from the reservation management unit 39 (S13). Further, the miss program auto detector 31 notifies the miss program searching unit 33 of the title of the miss program (S14). Whereas if the collated result shows being identical, the miss program auto detector 31 directly finishes the processing.

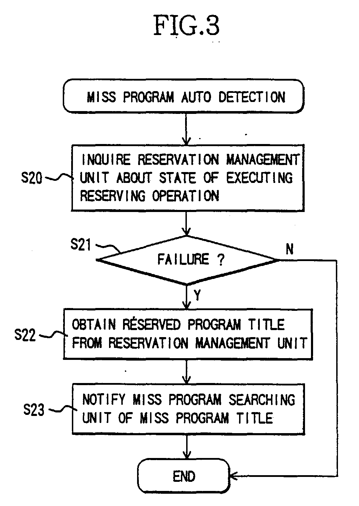

FIG. 3 shows processes of the miss program auto detector 31 for detecting a failure in executing the reserving operation (a state in which the reservation management unit 39 sets in each record of the reservation database 42). The miss program auto detector 31 is, if unjudged by use of the face image data of the audience, actuated periodically from a built-in timer of the CPU 1, and executes the processes shown in FIG. 3.

The miss program auto detector 31, upon being started up, to begin with, inquires the reservation management unit 39 about a state of executing the reserving operation (S20). Next, the miss program auto detector 31 judges a result of inquiry (S21).

If failing to execute the reservation, the miss program auto detector 31 obtains a title of the reserved program concerned from the reservation management unit 39 (S22). Next, the miss program auto detector 31 notifies the miss program searching unit 33 of the program title (S23). Whereas if successful, the miss program auto detector 31 comes directly to an end of processing.

### [Miss Program Searching Unit 33]

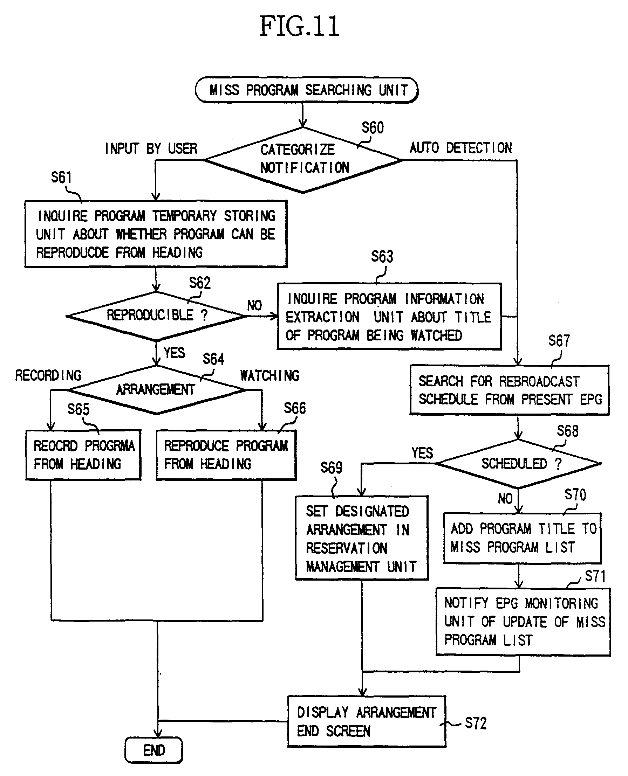

FIG. 11 shows processes by the miss program searching unit 33. The miss program searching unit 33 starts the processing upon a notification based on an input of the user from the miss program notification input screen 30 (or the infrared remote controller 19) or a notification given from the miss program auto detector 31.

At first, the miss program searching unit 33 judges a category of the notification (S60). If the notification is based on the user's input, the miss program searching unit 33 inquires the program temporary storing unit 43 as to whether or not the program (being watched at the present) can be reproduced from its heading (S61).

If reproducible, the miss program searching unit 33 confirms an arranging operation (S64). The arranging operation connoted herein is an operation set beforehand in the environment setting menu. If notified via the miss program notification input screen 30 when the user watches the program, the recording or watching from a program starting time is executed in accordance with this arranging operation.

If the arranging operation indicates the recording, the miss program searching unit 33 notifies the program temporary storing unit 43 of a purport that the program should be recorded from its heading (S65). On the other hand, if the watching is indicated, the miss program searching unit 33 notifies the program temporary storing unit 43 of the purport that the program should be reproduced from the heading (S66).

Further, if not reproducible, the miss program searching unit 33 inquires the program information extraction unit 34 about a program title, wherein the a channel that is on the watching at the present and a broadcasting date/time serve as a key (S63). Next, a rebroadcasting schedule of that program is searched from the present electronic program information database 35 (S67).

As a result, when judging that there is the rebroadcasting schedule (S68), the miss program searching unit 33 notifies the reservation arrangement unit 38 of a purport that the reservation management unit 39 should make arrangements for reservation thereof (S69). Thereafter, the miss program searching unit 33 makes the reservation arrangement unit 38 display a completion-of-arrangements screen (S72), comes to an end of processing.

Whereas if judging that there is no rebroadcasting schedule (S68), the miss program searching unit 33 adds the program title to the miss program list 37 (S70). Next, the miss program searching unit 33 gives a notification to the EPG monitoring unit 36 to update the miss program list 37 (S71). Thereafter, the miss program searching unit 33 makes the reservation arrangement unit 38 display the completion-of-arrangements screen (S72), and finishes the processing.

Further, if the judgement in S60 is that the notification is categorized as being given from the miss program auto detector 31, the title of the miss program has already been notified of, and hence the miss program searching unit 33 executes the processes from S67 onwards in the same way.

### [Processes by Program Information Extraction Unit 34]

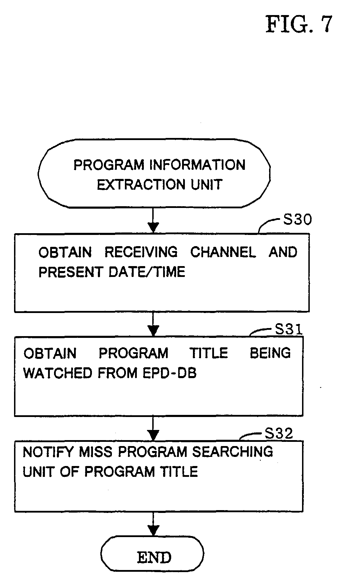

FIG. 7 shows processes by the program information extraction unit 34. To start with, the program information extraction unit 34 is, upon receiving a receiving channel and present date/time specified by the miss program searching unit 33, indicated to extract a program title (S30). Then, the program information extraction unit 34 obtains the concerned program title out of the electronic program information database 35 (S31). Subsequently, the program information extraction unit 34 notifies the miss program searching unit 33 of the obtained program title (S32), and finishing the processing.

### [Processes by EPG Monitoring Unit 36]

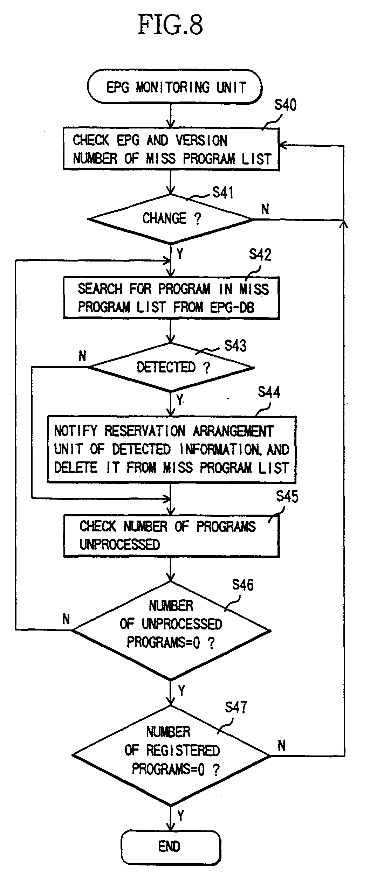

FIG. 8 shows processes by the EPG monitoring unit 36. The EPG monitoring unit 36 starts the processing when given a notification from the miss program searching unit 33 that the miss program list 37 has been updated.

To begin with, the EPG monitoring unit 36 checks the update of the electronic program information database 35 (S40). If there is a change in the data of the electronic program information database 35 (Yes in S41), the EPG monitoring unit 36 reads one single program title stored in the miss program list 37 from the heading, and searches for a broadcasting schedule of that program from the electronic program information database 35 (S42).

If the broadcasting schedule of that program is detected (Yes in S43), the EPG monitoring unit 36 notifies the reservation arrangement unit 38 of information on that program broadcasting schedule, and further deletes that program from the miss program list 37 (S44). Next, the EPG monitoring unit 36 checks whether or not the search for all the programs registered in the miss program list 37 is ended (whether or not there remains any program to be retrieved next) (S45). If an unprocessed program exists in the miss program list 37 (No in S46), the processes from S42 onward are repeated for the next program.

The EPG monitoring unit 36 checks, also when the broadcasting schedule of the program is not detected in the judgement in S43, whether or not the search for all the programs registered in the miss program list 37 is finished (S45).

As a result of the processing described above, upon a completion of the retrieval of broadcasting schedules of all the programs in the miss program list 37 (Yes in S46), the EPG monitoring unit 36 makes a judgement about the number of programs registered in the miss program list 37 (S47). If the programs of which the broadcasting schedule is not yet detected still remain in the miss program list 37, the EPG monitoring unit goes back to a state of waiting for updating the electronic program information database 35. While on the other hand, when the number of programs registered in the miss program list 37 is 0, the EPG monitoring unit 36 finishes the processing.

### [Processes by Reservation Management Unit 39]

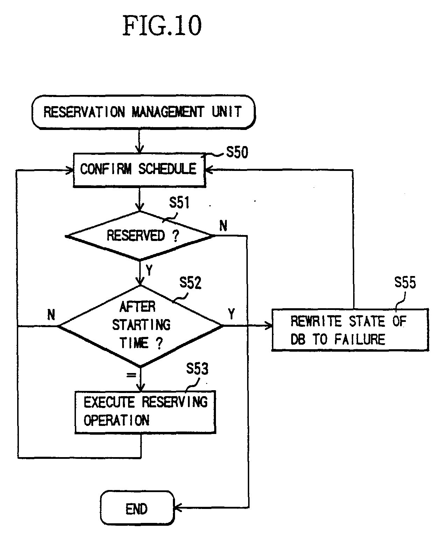

FIG. 10 shows processes by the reservation management unit 39. At the first onset, the reservation management unit 39 confirms the schedule (reserved contents) of the reservation database 42 (S50), and judges whether or not there is a reserved program (S51). If there is no reserved program, the reservation management unit 39 directly finishes the processing. If reserved, the reservation management unit 39 compares a starting time of the reserved program with a present time (S52).

If the broadcast starting time is not yet reached, the reservation management unit 39 reverts to a state of confirming the schedule. If already past the broadcast starting time, the reservation management unit 39 assumes this as a failure in the reserving operation and rewrites the state of the record to the "failure state" (S55). Then, the reservation management unit 39 returns to the confirmation of the schedule.

On the other hand, if just before the broadcast starting time (before a predetermined time or just at that time), the reservation management unit 39 indicates the receiving control unit 40 or the recording control unit 41 to reserve the program (S53). Next, the reservation management unit 39 the relevant record of the reservation database 42 to "starting state", and returns to the confirmation of the schedule.

Note that the reservation management unit 39, when notified of the completion of the reserving operation (when given the notification due to an interrupt from the receiving control unit 40 or the recording control unit 41), rewrites the content of the reservation database 42 to the "completed state ". Further, even when the continuous time elapses with its completion unreported from the receiving control unit 40 or the recording control unit 41 after the state is set to "starting state" in each record of the reservation database 42, the reservation management unit 39 treats the reserving operation as the failure. Namely, the reservation management unit 39 rewrites the state of that record to the "failure state".

### [Processes by Reservation Arrangement Unit 38]

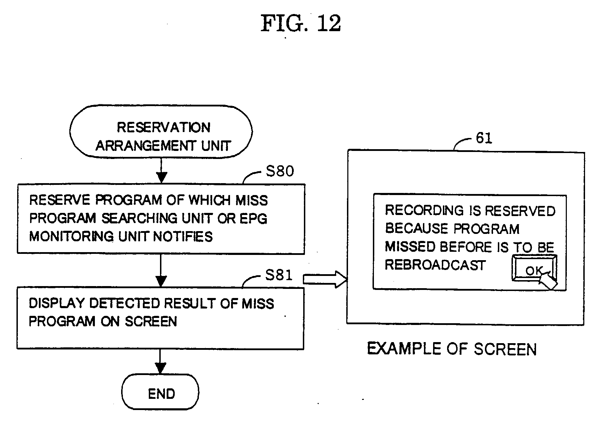

FIG. 12 shows processes by the reservation arrangement unit 38. The reservation arrangement unit 38 executes the processes shown in FIG. 12 in response to a command from the miss program searching unit 33 or the EPG monitoring unit 36.

To begin with, the reservation arrangement unit 38 request the reservation management unit 39 to reserve the notified program (the reservation for watching or recording) (S80). Next, the reservation arrangement unit 38 displays a result of searching the miss program and a purport of having reserved it on the screen (S81). This display has a content that "the program missed before is to be rebroadcast, and the program recording has been therefore reserved" as shown in a screen example 71 n FIG. 12. When the user clicks an OK button, the screen example 61 is erased.

As discussed above, in the broadcast receiving system in the first embodiment, the audience recognizes a miss of the program, and, when given the notification from the miss program notification input screen 30, this program is reserved for watching or recording. Hence, when reserving the miss program, an operational burden on the audience is relieved.

Further, the reservation arrangement unit 38 informs the audience of a schedule of rebroadcasting the miss program and of a completion of the reservation for watching or recording, whereby a probability of watching the miss program might increase.

Moreover, it is automatically judged based on the images photographed by the audience detector 4 whether or not a person identical with the program reserving person watched the program, and hence a probability of detecting the miss program rises. Further, it is also automatically judged whether or not the audience exists in the vicinity of the broadcast receiving system at the program starting time, and the probability of detecting the miss program therefore increases. Still further, the completion (or the failure) of the reserving operation is grasped based on the reservation schedule such as the broadcasting time, the continuous time, etc. of the reservation database 42, so that the program with its watching or recording uncompleted can be surely detected. There is no necessity for a manual operation of reserving the watching or the recording of the program missed by the audience, and hence a simple reserving process is attained with a less operational burden.

Further, if a next broadcasting schedule of the miss program can not be detected from the electronic program information database 36, each time the electronic program information database 36 is updated, the EPG monitoring unit 36 repeatedly searches for the broadcasting schedule of that miss program till this broadcasting schedule is detected. Accordingly, there rises a probability of finding out the broadcasting schedule of the program arranged for its reservation.

Moreover, the broadcast receiving system in the first embodiment, when recording or watching again the program being watched at the present from the beginning of the program, refers to the receiving data stored in the program temporary storing unit 43, and is therefore capable of raising the probability in which the watching or the recording is retried once again.

Further, the above functions in the broadcast receiving system in the first embodiment are actualized by only the devices provided on the side of the audience.

### 〈Modification of Miss Program Auto Detector 31〉

In the first embodiment, the miss program judging unit 32 executing the face recognition program involving the use of the template matching method, and thereby judges whether or not the face of the reserving person is identical with the face of the audience (by use of the correlation value), thus automatically detecting the miss of the program. The embodiment of the present invention is not limited to this mode.

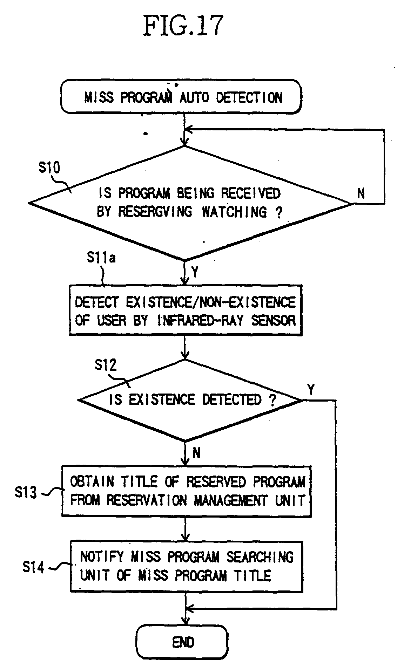

For example, a dedicated LSI for executing a comparison between two images may also be used instead of the face recognition program. Further, fingerprints may also be detected without using the face images. Another contrivance is to recognize whether or not somebody exists in front of the broadcast receiving system at the reservation time without even collating the persons. For attaining this, the CCD camera is not required as the audience detector 4 shown in FIG. 1, and what is capable of detecting an existence/non-existence of a person, e.g., an infrared-ray sensor may suffice. FIG. 17 shows processes by the miss program judging unit 32 in this case.

A flowchart in FIG. 17 is substantially the same as FIG. 2, excluding a process in S11a. That is, the face of the audience is imaged by the audience detector 4 (the CCD camera, etc.) and collated with the face of the reserving person. Instead, the existence and non-existence of the audience is confirmed by the infrared-ray sensor.

The audience detector 4 for confirming the existence/non-existence of the audience is not confined to the infrared-ray sensor. For instance, a push switch is provided on a seat of chair, and the audience sitting on the chair may be detected.

### 〈Readable-by-Computer Recording Medium〉

The program executed by the CPU 1 explained in the first embodiment is recorded on a readable-by-computer recording medium, and read by a computer incorporating the TV receiving card 7 described in the first embodiment, thereby actualizing the broadcast receiving system in the first embodiment.

In that case, the software and hardware incorporated into the computer may be used as the operating system and the device driver for peripheral devices. Accordingly, the recording medium may contain program modules for providing at least the functions peculiar to the present invention.

The readable-by-computer recording medium connoted herein is a recording medium capable of storing information such as data, programs, etc. by electrical, magnetic, optical mechanical or chemical action, which can be read by the computer. This type of recording medium may be exemplified by, e.g., a floppy disk, a magneto-optic disk, a CD-ROM, a CD-R/W, a DVD, a DAT, an 8mm tape, a memory card and so on.

Further, this program is stored in the hard disk and the memory of the computer may be downloaded to other computers via the communications line. Then, the program-downloaded computer is capable of functioning as the broadcast receiving system in the first embodiment.

The typical hardware architecture of the computer in which the recorded-on-the-hard-disk program of the present invention is developed on the memory, and the CPU is made to execute this program, has been exemplified by way of the broadcast receiving system in the first embodiment of the present invention. The embodiment of the present invention is not, however, limited to this architecture. The present invention can be embodied based on a hardware architecture of the computer constructed such that, for example, the program of the present invention is recorded not in the hard disk but in a ROM and executed by the CPU.

### 〈Modified Example of Components Corresponding to Reservation Unit〉

The reservation arrangement unit 38 and the reservation management unit 39 provide the functions corresponding to the reservation unit in the first embodiment. Further, the reservation management unit 39 issues the commands to the receiving control unit 40 and the recording management unit 41 to receive and record the reserved program. The embodiment of the present invention is not, however, restricted to this construction. For instance, even when having no reservation management unit 39, the reservation arrangement unit 38 writes the program reservation to the reservation database 42, and the receiving control unit 40 or the recording control unit 41 reads the reservation data directly from the reservation database 42. Then, the receiving or recording of the reserved program may also be executed based on a built-in timer of the CPU 1. In this case, the reservation arrangement unit 38 corresponds to the reservation unit.

Moreover, the miss program searching unit 33 and the EPG monitoring unit 36 may write the reservation of the program directly to the reservation database 42 without through the reservation arrangement unit 38. In this case, the miss program searching unit 33 and the EPG monitoring unit 36 correspond to the reservation unit.

### 〈Modified Examples of Electronic Program Information Database 35 and Reservation Database 42〉

In the first embodiment, the electronic program information database 35 is structured of the records, i.e., the six fields such as the ID, title, broadcasting date, starting time, continuous time and channel. The embodiment of the present invention is not limited to this structure. For instance, if the database is structured of fixed-length records each having the same length, the record can be univocally recognized by each record address, and hence the ID may not be provided. Further, a broadcast starting date, a starting time, a broadcast ending date, and an ending time may also be recorded in place of the broadcasting date, the starting time and the continuous time. In that case, the broadcast starting date, the starting time, the broadcast ending date, the ending time and the channel correspond to a broadcast schedule.

Moreover, the respective fields constituting the records is not confined to the field sequence shown in FIG. 6. The structure of the database is not restricted to the file constructed of simple fixed-length records. Namely, the electronic program information database 35 may also be structured as a file consisting of variable-length records, or an index file.

In the first embodiment, the reservation database 42 is structured of the records, i.e., the eight fields such as the reservation ID, program ID, broadcasting date, starting time, continuous time, function, state and channel. The embodiment of the present invention is not, however, limited to this structure. For instance, if the database is structured of fixed-length records each having the same length, the record can be univocally recognized by each record address, and hence the ID may not be provided. Further, the broadcast starting date, the starting time, the broadcast ending date, and the ending time may also be recorded in place of the broadcasting date, the starting time and the continuous time. The respective fields constituting the records is not confined to the field sequence shown in FIG. 9. The structure of the database is not restricted to the file constructed of simple fixed-length records. The reservation database 42 may also be structured as the file consisting of variable-length records, or the index file.

### 〈Format of Receiving Data〉

The broadcast receiving system in the first embodiment involved the use of the decoder based on the MPEG, however, the embodiment of the present invention is not limited to the data compression method. Further, the broadcast receiving system in the first embodiment aims at the digital TV broadcasting. The embodiment of the present invention is not, however, confined to the digital broadcasting. If the watching target is set to the analog broadcasting, not the MPEG decoder but an amplifier for converting a signal level is applied as the broadcast reproducing unit 7b shown in FIG. 5.

### 〈EPG Transmitting Method and EPG Acquiring Method〉

The broadcast receiving system in the first embodiment receives an EPG (Electronic Program Guide) transmitted in a way of being overlapped in a stream of the digital broadcast. The embodiment of the present invention is limited to neither the EPG transmitting method nor the acquiring method on the user's side. For example, in the case of the analog broadcasting, the EPG is transmitted in a way of running on portions of VBI (Vertical Blanking Interval) of the electronic radio waves. In this case also, the same content is repeatedly transmitted at a short interval so that the information can be obtained on the receiving side whenever the receiving may start. Then, if the program table to be transmitted is updated, the receiving side is notified of this purport.

Further, the EPG may be electronically distributed via media excluding the broadcasting electronic waves as on the Internet by way of other transmitting method thereof.

The receiving side receiving the program to be broadcast, if notified of the update of the program table or if the EPG is not retained within the receiver (such as, e.g., a new installation into a device, a cut-off of the main power source of the device and other troubles), may receive the EPG and store the EPG in the memory in the device. For instance, in the case of the digital broadcasting, the EPG may be obtained by separating the EPG from the stream. In the case of the analog broadcasting, the EPG is obtained by separating the EPG from the broadcast electronic waves.

If the device on the receiving side does not have the memory for storing the EPG, it follows that the EPG may be received each time.

Further, for instance, if the program table is indicated on the Web site of the Internet, the EPG may be obtained by accessing the Web site and by downloading the program table. Moreover, if the EPG is transmitted by E-mail, the EPG may be extracted from the received E-mail.

### 〈Category of Broadcasting Medium〉

The first embodiment has exemplified the TV broadcasting. The "program for broadcasting" according to the present invention is not, however, limited to the normal TV broadcast program composed of the picture and voice. That is, the "program for broadcasting" includes programs of broadcasts making use of the radio broadcast networks. The "watching of the program for broadcasting" implies both of watching a program of only broadcast pictures and hearing a program of the broadcast music and voices.

It is noted, as explained above, that the computer may be constructed to include a radio tuner or a signal input unit for inputting the receiving signal of the radio if aiming at the radio broadcast, and a MODEM and a LAN card if aiming at the broadcast making use of the network.

### 〈Predetermined State〉

The miss of the program and the omission of recording the program have been exemplified as the predetermined states for the program in the first embodiment. The present invention is not, however, limited to these states. In short, the requirement may be such that the state and the event in which the next broadcast schedule of the target program should be retrieved, are defined as detection targets in the present invention. Accordingly, the embodiment of the present invention is not restricted to these predetermined state and the categories of the contents.

### 〈Other Modified Examples〉

The broadcast receiving system in the first embodiment includes the electronic program information database 35. The embodiment of the present invention is not, however, limited to this construction. That is to say, irrespective of receiving the digital TV broadcast or the analog TV broadcast, it may be possible to provide such a configuration that a desired item of program information is retrieved simply from a device (such as a file server, database server, etc.) for retaining the said information without the electronic program information being retained in the self-device.

In the first embodiment, the CCD camera is provided as the audience detector 4 for imaging the face of the audience. The present invention is not, however, limited to the CCD camera. For instance, the imaging device may be a digital camera using an FET, a CMOS, etc..

In the first embodiment, the three pieces of hard disks 3a ∼ 3c are used. The embodiment of the present invention is not, however, limited to this mode. For example, one single hard disk into which the hard disks 3a ∼ 3c are unified may also be used. Alternatively, each of the hard disks 3a, 3b, 3c may be constructed of a plurality of sub hard disks.

In the first embodiment, if the miss program searching unit 33 is unable to find out the rebroadcasting schedule of the miss program, this item of program information is added to the miss program list 37. The EPG monitoring unit 36 reads the miss program list 37 and continuously monitors the broadcast schedule. The embodiment of the present invention is not, however, limited to this mode. For example, the miss program searching unit 33, if unable to detect the schedule for rebroadcasting the miss program, may send the program information thereof as a message directly to the EPG monitoring unit 36.

In the first embodiment, the infrared remote controller 19 is used for performing the remote control. The embodiment of the present invention is not, however, confined to the infrared remote controller 19. Namely, a switch box connected via a signal cable may also be used for the remote control. Further, laser beams and electromagnetic waves other than the infrared rays may also be used.

In the first embodiment, if giving a notification through the miss program notification input screen when the user is on the watching, the recording or watching from the beginning of the program is executed in accordance with the arranging operation set beforehand in the environment setting menu. Instead of this mode, when the audience notifies miss through the miss program notification input screen 30, the audience may be allowed to choose the recording or watching.

In the first embodiment, the miss program auto detector 31 is periodically actuated from the built-in timer of the CPU 1. In place of this operation, the miss program auto detector 31 may start the processing upon a notification from the reservation management unit 39.

Moreover, in the first embodiment, the miss program auto detector 31 periodically inquires the reservation management unit 39, thereby judging whether the reserving operation results in a failure or not. Instead of this, the miss program auto detector 31 periodically monitors the reservation database 42, and the above judgement may thus be made. Further, the reservation management unit 39 may notify the miss program auto detector 31 of a failure in the reserving operation.

In the first embodiment, a program title is searched, wherein the broadcasting date/time and the channel serve as a key for searching for the miss program. The program title may also be retrieved by use of a program ID (e.g., G-code) given to every program.

### (Second Embodiment)

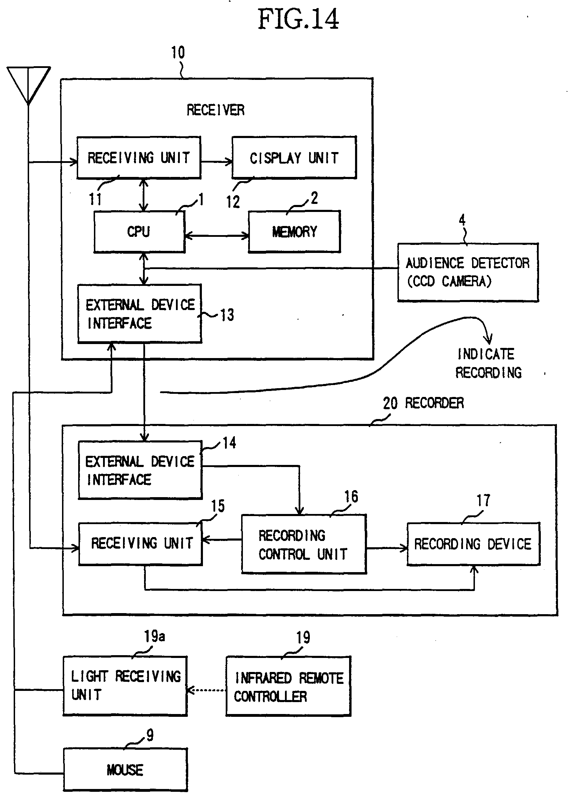

Referring to FIG. 14, the broadcast receiving system in a second embodiment of the present invention will be discussed. The first embodiment has exemplified the architecture in which the broadcast receiving system of the present invention is embodied by use of the personal computer. By contrast, the second embodiment will exemplify an architecture of using a dedicated receiver and a recording device connected to this receiver. Other configurations (structures of functions) and the processes of the program are the same as those in the first embodiment, and therefore FIGS. 1 through 12 will be referred to as the necessity may arise.

### 〈Architecture〉

FIG. 14 shows an example of a hardware architecture of the broadcast receiving system in the second embodiment of the present invention. This broadcast receiving system includes a receiver 10 and the audience detector 4.

The receiver 10 has a receiving unit 11 for receiving the TV broadcast, a display unit 12 for displaying pictures of the TV broadcast received, the memory 2, an external device interface 13 (corresponding to a connection unit) for connecting an external device, and the CPU 1 for controlling the receiver 10.

The receiving unit 11, as in the case of the TV receiving card 7 in the first embodiment, receives a designated program of the TV broadcast, and transmits demodulated pictures to the display unit 12. Note that the receiving unit 11 demodulates also the sound signals. The sound signals are amplified by an unillustrated amplifier and outputted from an unillustrated loudspeaker.

The display unit 12, as by the CRT 6 and the graphic card 8 in the first embodiment, displays the pictures of the TV broadcast and the display data from the CPU 1.

The CPU 1 executes the same control-programs as the control-programs (shown in FIGS. 2, 3, 7, 8, 10 to 12, and 17) executed by the CPU 1 in the first embodiment, thereby providing a function as the broadcast receiving system.

The memory 2, as in the first embodiment, stores the variety of control- programs executed by the CPU 1, and also stores the data inputted to and outputted from the CPU 1 with the executions of those control-programs.

A recorder 20 (corresponding to a recording unit), the infrared remote controller 19, a light receiving unit 19a and a mouse 9 are connected to the external device interface 13.

The recorder 20 is connected via the external device interface 14 to the receiver 10. The recorder 20 includes, in addition to the external device interface 14, a receiving unit 15, a recording control unit 16 and a recording device 17.

The external device interface 14 is connected to an external device interface 13 of the receiver 10, and relays communications between the recording control unit 16 and the CPU 1.

The recording control unit 16, based on an indication given from the reservation management unit 39 under the execution by the CPU 1, indicates the receiving unit 15 to receive a predetermined program, and further indicates the recording device 17 to record the same program.

The receiving unit 15, responding to an indication from the recording control unit 16, receives a program broadcast on a predetermined channel, and transfer this program to the receiving device 17.

The recording device 17 records a content of the program received by the receiving unit 15.

The infrared remote controller 19 converts an operation of the audience into infrared-ray signals and transmits these signals to the light receiving unit 19a.

### 〈Function and Operation〉

A function and an operation of this broadcast receiving system are substantially the same as those of the broadcast receiving system in the first embodiment. In this broadcast receiving system, however, any one of the memory 2 of the receiver 10 or the recording device 17 of the recorder 20 may be used as the program temporary storing unit 43 explained in the first embodiment.

Further, the recording control unit 16 is included in the recorder 20, and hence the reservation management unit 39 under the execution of the CPU 1 indicates the recording control unit 16 to implement the recording by the communications via the external device interfaces 13, 14.

### 〈Modified Example〉

In the second embodiment, any one of the memory 2 of the receiver 10 and the recording device 17 of the recorder 20 is used as the program temporary storing unit 43 explained in the first embodiment. The embodiment of the present invention is not, however, limited to this mode. For example, the receiver 10 or the recorder 20 has a hard disk, and this hard disk may be used as the program temporary storing unit 43 as in the first embodiment.

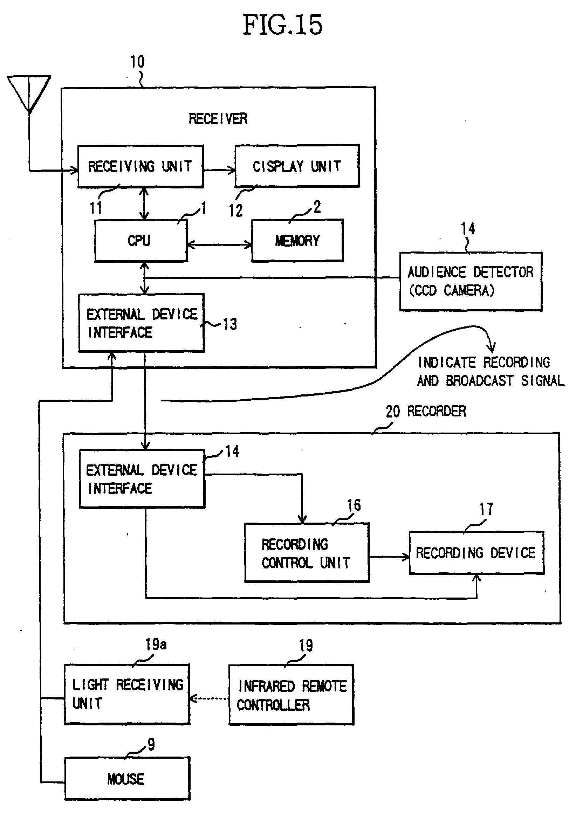

The broadcast receiving system in the second embodiment includes the receiving unit 11 of the receiver 10 for the watching of the TV broadcast, and the receiving unit 15 of the recorder 20 for recording the TV broadcast. A construction as a substitute for this may be taken, wherein the recorder 20 is not provided with the receiving unit 15. FIG. 15 shows an example of a hardware architecture in that case. Referring to FIG. 15, a content of the program received by the receiving unit 11 of the receiver 10 is transferred to the recorder 20 via the external device interfaces 13, 14, and recorded by the recording device 17.

In the second embodiment, the reservation management unit 39 under the execution by the CPU 1 of the receiver 10 indicates the recording control unit 16 to implement the recording in the communications via the external device interfaces 13, 14. Accordingly, the recording control unit 16 of the recorder 20 controls the receiving and recording processes. The embodiment of the present invention is not, however, limited to this architecture. For instance, the recording control unit 41 under the execution by the CPU 1 of the receiver 10 is provided and may also control (recording, reproducing, fast forwarding of) the recorder 20. Further, the receiving control unit 40 under the execution by the CPU 1 of the receiver 10 may also control the receiving unit 14 of the recorder 20.

### (Third Embodiment)

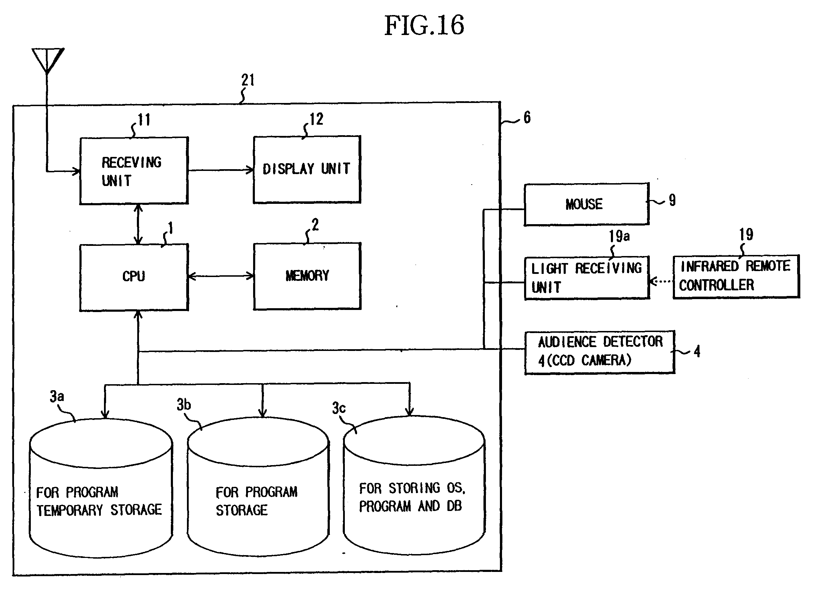

Referring to FIG. 16, the broadcast receiving system in a third embodiment of the present invention will be discussed. The first embodiment has exemplified the architecture in which the broadcast receiving system of the present invention is embodied by use of the personal computer. By contrast, the third embodiment will exemplify an architecture of using a dedicated receiver 21. Further, the broadcast receiving system in the second embodiment includes the external device interface 13 to which the recorder 20 is connected, whereby the program is recorded. On the other hand, in the broadcast receiving system in the third embodiment, the program is recorded on the built-in hard disk 3b (corresponding to a recording unit). Other configurations (structures of functions) and the processes of the program are the same as those in the first and second embodiments, and therefore FIGS. 1 through 12 will be referred to as the necessity may arise.

### 〈Architecture〉

FIG. 16 shows an example of a hardware architecture of the broadcast receiving system in the third embodiment of the present invention. This broadcast receiving system includes a receiver 21, the audience detector 4 for detecting the audience, the light receiving unit 19a of the infrared remote controller 19 and the mouse 9.

The receiver 21 has a receiving unit 11 for receiving the TV broadcast, the display unit 12 for displaying pictures of the TV broadcast received, the memory 12, the CPU 1 for controlling the receiver 10, and the hard disks 3a ∼ 3c.

The receiving unit 11, as in the case of the TV receiving card 7 in the first embodiment, receives a designated program of the TV broadcast, and transmits demodulated pictures to the display unit 12. Note that the receiving unit 11 demodulates also the sound signals. The sound signals are amplified by an unillustrated amplifier and outputted from an unillustrated loudspeaker.

The display unit 12, as by the CRT 6 and the graphic card 8 in the first embodiment, displays the pictures of the TV broadcast and the display data from the CPU 1.

The CPU 1 executes the same programs as the programs (shown in FIGS. 2, 3, 7, 8, 10 to 12, and 17) executed by the CPU 1 in the first embodiment, thereby providing a function as the broadcast receiving system.

The memory 2, as in the first embodiment, stores the variety of programs executed by the CPU 1, and also stores the data inputted to and outputted from the CPU 1 with the executions of those programs.

The functions of the hard disks 3a ∼ 3c are the same as those in the first embodiment. Namely, the hard disk 3a is used for temporarily storing the program being received as receiving data. The hard disk 3b is sued for storing the record of the program. Further, the hard disk 3c is employed as a storage area for the operating system, or the variety of programs or the database.

### 〈Function and Operation〉

The broadcast receiving system in the third embodiment involves the use of the dedicated receiver 21 as a substitute for the personal computer as a piece of hardware, however, the function and the operation of this broadcast receiving system are the same as those of the broadcast receiving system in the first embodiment. Accordingly, the CPU 1 executes the same programs as the programs (FIGS. 2, 3, 7, 8, 10 to 12, and 17) executed by the CPU 1 in the first embodiment, thereby providing the function of the broadcast receiving system.

### 〈Modified Example〉

In the broadcast receiving systems in the first through third embodiments, the reservation arrangement unit 38 may also be constructed so that both of the watching and the recording can be reserved if the miss of program is detected. Similarly, in the broadcast receiving systems in the first through third embodiments, the reservation arrangement unit 38 may also be constructed so that both of the watching and the recording can be reserved if the omission of recording of the program is detected.

## Claims

1. A broadcast receiving system comprising:
a detection unit detecting a predetermined state with respect to a program that is to be broadcast;
a storage unit storing a location of program information containing a broadcast schedule of the program to be broadcast;
a broadcast schedule searching unit searching for a next broadcast schedule of the program from the program information in accordance with the detection of the predetermined state; and
a reservation unit executing at least one of notifying of a result of the search and a reserving operation for the program.

2. A broadcast receiving system according to claim 1, further comprising:
an update monitoring unit monitoring an update of the program information,
wherein said broadcast schedule searching unit, if unable to find out a next broadcast schedule of the program, repeatedly searches for the program information when the program information is updated till the next broadcast schedule of the program is found out.

3. A broadcast receiving system according to claim 1, further comprising:
a reservation management unit judging whether or not an operation for the reserved program is completed,
wherein said detection unit, if said reservation management unit judges that the operation for the reserved program is not completed, detects the predetermined state with respect to the program.

4. A broadcast receiving system according to claim 1, further comprising:
a notification receiving unit receiving a notification of the predetermined state with respect to the program notified by a user operation,
wherein said detection unit detects the predetermined state with respect to the program by receiving the notification.

5. A broadcast receiving system according to claim 1, further comprising:
a program temporary storing unit temporarily storing the program being received as receiving data,
wherein when detecting the predetermined state with respect to the program that is on the receipt, the processing of the system is executed by use of the receiving data of the program temporarily stored.

6. A broadcast receiving system according to claim 1, wherein the predetermined state is a miss of the program, and
the reserving operation for the program is a reservation of watching or recording.

7. A broadcast receiving system according to claim 1, further comprising:
a connection unit connecting said recording device,
wherein said reservation unit reserves recording of the program by said recording device.

8. A broadcast receiving system according to claim 1, further comprising:
a recording unit recording the program,
wherein said reservation unit reserves recording of the program by said recording unit.

9. A broadcast receiving system according to claim 1, wherein the predetermined state is an omission of recording of the program, and
the reserving operation for the program is a reservation of watching or recording.

10. A broadcast receiving system according to claim 9, further comprising:
a connection unit connecting a recording device,
wherein said reservation unit reserves recording of the program by said recording device.

11. A broadcast receiving system according to claim 9, further comprising:
a recording unit recording the program,
wherein said reservation unit reserves recording of the program by said recording unit.

12. A broadcast receiving system according to claim 6, further comprising:
a connection unit connecting a display device,
wherein said detection unit has an audience detector for detecting an existence of an audience in the vicinity of the system or said display device connected to the system, and
said detection unit detects the miss of program if said audience detector dose not detect the existence of the audience at a broadcasting time of the program of which the watching has been reserved.

13. A broadcast receiving system according to claim 6, wherein said detection unit, if a reserving person of the program is not identical with the audience of the program, detects the miss of the program.

14. A readable-by-computer recording medium recorded with a program for making a computer execute:
a step of detecting a predetermined state with respect to a program that is to be broadcast;
a step of searching for a next broadcast schedule of the program from program information in accordance with the detection of the predetermined state; and
a step of executing at least one of notifying of a result of the search and a reserving operation for the program.

15. A readable-by-computer recording medium recorded with a program for making a computer execute:
a step of detecting a miss of a program that is to be broadcast;
a step of searching for a next broadcast schedule of the program from program information in accordance with the detection of the miss of the program; and
a step of reserving watching of the program on the basis of the search.

16. A readable-by-computer recording medium recorded with a program for making a computer execute:
a step of detecting an omission of recording of a program that is to be broadcast;
a step of searching for a next broadcast schedule of the program from program information in accordance with the detection of the omission of recording of the program; and
a step of reserving the recording of the program on the basis of the search.

17. A broadcast receiving method comprising:
a step of detecting a predetermined state with respect to a program that is to be broadcast;
a step of searching for a next broadcast schedule of the program from program information in accordance with the detection of the predetermined state; and
a step of executing at least one of notifying of a result of the search and a reserving operation for the program.

18. A broadcast receiving method comprising:
a step of detecting a miss of a program that is to be broadcast;
a step of searching for a next broadcast schedule of the program from program information in accordance with the detection of the miss of the program; and
a step of reserving watching of the program on the basis of the search.

19. A broadcast receiving method comprising:
a step of detecting an omission of recording of a program that is to be broadcast;
a step of searching for a next broadcast schedule of the program from program information in accordance with the detection of the omission of recording of the program; and
a step of reserving the recording of the program on the basis of the search.
